# EUROPÄISCHE PATENTSCHRIFT

(11) **EP 2 706 320 B1**
(45) Veröffentlichungstag und Bekanntmachung des Hinweises auf die Patenterteilung: **14.02.2018**
(21) Anmeldenummer: 13183774.2
(22) Anmeldetag: 10.09.2013
(51) Int. Cl.: F28F 7/02, B22F 3/105, F28D 7/08, B22F 5/10

(54) **Rohrwärmetauscher**
Tube heat exchanger
Echangeur thermique à tubes

(30) Priorität: 10.09.2012 DE 102012108427
(43) Veröffentlichungstag der Anmeldung: 12.03.2014
(73) Patentinhaber: Additive 3D Training GmbH, 16259 Bad Freienwalde (DE)
(72) Erfinder: Hanreich, Dipl.-Ing., Klaus, 15745 Wildau (DE)
(74) Vertreter: Reininger, Jan Christian

(56) Entgegenhaltungen:
- EP-A1- 1 093 841
- WO-A1-2007/108240
- DE-A1- 1 501 410
- DE-A1- 19 937 315
- DE-A1-102004 032 093
- JP-A- 2010 230 213
- US-A- 1 571 068
- US-A- 4 330 035
- US-A- 5 579 650
- US-A1- 2008 149 304
- US-A1- 2008 149 313

## Beschreibung

Die Erfindung betrifft einen Rohrwärmetauscher zur indirekten Wärmeübertragung zwischen einer in einem Mantelraum angeordneten Rohrleitung strömenden ersten Medium und einem durch den Mantelraum strömenden zweiten Medium.

Bei den bekannten Platten- oder Rohrwärmetauschern mit indirekter Wärmeübertragung (Rekuperatoren) wird Wärme von einem - flüssigen oder gasförmigen - wärmeren Medium auf ein anderes - kälteres Medium übertragen, ohne dass die beiden Medien miteinander in direktem Kontakt stehen. Gegenüber den kompakt ausgebildeten und wegen der großen Wärmetauscherflächen in der Wärmeübertragungsfähigkeit sehr energieeffizienten Plattenwärmeübertragern weisen die bekannten Rohrwärmetauscher einen großen Bauraum und eine geringere Wärmeübertragungseffizienz auf. Die Herstellung der aus individuell gefertigten, unterschiedlichen Einzelteilen zusammengesetzten Rohrwärmetauscher ist zudem mit einem erheblichen Fertigungs- und Montageaufwand verbunden.

EP 1 093 841 A1 beschreibt einen Rohrwärmetauscher mit mehreren in einem geschlossenen, quaderförmigen Gehäuse angeordneten geradlinigen Rohrleitungen, die über U-förmige Verbindungen verbunden sind. In dem Gehäuse sind weiterhin mehrere Trennwände mit mehreren Löchern angeordnet, durch die die Rohrleitungen hindurchgeführt sind und die derart angeordnet sind, dass ein Strömungskanal mäanderförmig verläuft.

Der Erfindung liegt die Aufgabe zugrunde, einen kompakt ausgebildeten Rohrwärmetauscher mit geringem Platzbedarf und dennoch hoher Wärmeübertragungseffizienz zu entwickeln, der zudem in seiner Größe und Wärmeübertragungskapazität an unterschiedliche Einsatzbedingungen anpassbar ist.

Erfindungsgemäß wird die Aufgabe mit einem gemäß den Merkmalen des Patentanspruchs 1 ausgebildeten Rohrwärmetauscher gelöst.

Vorteilhafte Weiterbildungen der Erfindung sind Gegenstand der Unteransprüche.

Bei einem Rohrwärmetauscher der eingangs erwähnten Art besteht der Grundgedanke der Erfindung in dessen Ausbildung als aus einem Stück bestehendes, durch selektives Laserschmelzen gefertigtes, quader- oder würfelförmiges Rohrwärmetauschermodul mit einem bis auf die Zuführungs- und Auslassanschlüsse geschlossenen Gehäuse zur Durchleitung des ersten Mediums und einer im Innern des Gehäuses auf engem Raum ausgebildeten Rohrleitung zur Durchleitung des zweiten Mediums. Die Rohrleitung ist zur Erzielung einer großen Wärmeübertragungsfläche vorteilhafterweise in mehreren Ebenen jeweils mäanderförmig im Gehäuse verlegt. Die Rohrleitung des Rohrwärmetauschermoduls verläuft in dem den Mantelraum bildenden geschlossenen Gehäuse mit ersten und zweiten Zuführungsanschlüssen und Auslassanschlüssen für das erste und zweite Medium in zwei oder mehreren Ebenen und jeweils mäanderförmig. Zwei oder mehrere Rohrwärmetauschermodule sind über oder nebeneinander montierbar und fest sowie an den jeweiligen, in einer Abdeckung oder Seitenwand ausgebildeten Zuführungs- und Auslassanschlüssen abdichtend miteinander verbindbar, wobei die in derselben Ebene verlaufenden Abschnitte der Rohrleitung untereinander und mit der Innenfläche der Seitenwände durch Querwände verbunden sind und mit diesen eine in dieser Ebene gebildete Trennfläche bilden, wobei der zwischen zwei Trennflächen oder einer Trennfläche und der oberen oder unteren Abdeckung vorhandene Strömungsraum durch in benachbarten Trennflächen an jeweils gegenüberliegenden Seiten vorhandene Überströmöffnungen in den Querwänden mit dem jeweils angrenzenden Strömungsraum verbunden ist und somit in dem Gehäuse ein mäanderförmig verlaufender Strömungskanal gebildet ist.
Der durch Laserschmelzen erzielte einstückige Aufbau des Rohrwärmetauschers erlaubt eine freie Gestaltung des Gehäuses und der in diesem verlaufenden Rohrleitung, so dass die Druck- und Reibungsverluste minimiert werden können und ein kompakt ausgebildeter Rohrwärmetauscher mit hoher Wärmeübertragungseffizienz bereitgestellt werden kann.
Das Gehäuse ist quader- oder würfelförmig ausgebildet und umfasst Seitenwände sowie eine obere und einer untere Abdeckung mit den in diesen oder in gegenüberliegenden Seitenwänden ausgebildeten Zuführungs- und Auslassanschlüssen.

In weiterer Ausbildung der Erfindung können die Rohrwärmetauschermodule an den mit den Zuführungs- und Auslassanschlüssen versehenen Bereichen des Gehäuses miteinander verschraubt werden. Zur lagerichtigen und einfachen Montage der Rohrwärmetauschermodule an deren mit den Zuführungs- und Auslassanschlüssen versehenen Flächen sind Positionierhilfen in Form von an diesen Flächen ausgebildeten, in montiertem Zustand ineinandergreifenden Erhöhungen und Vertiefungen vorgesehen. Durch die Möglichkeit der einfachen Aneinanderreihung und Verschraubung zweier oder mehrerer, identisch ausgebildeter Rohrwärmetauschermodule können Rohrwärmetauscher in der an den jeweiligen Anwendungsfall an gepassten Wärmeübertragungskapazität bereitgestellt werden.

Die in derselben Ebene verlaufenden Abschnitte der im Innern des Gehäuses verlaufenden Rohrleitung sind untereinander und mit der Innenfläche der Seitenwände des Gehäuses durch Querwände verbunden. Dadurch wird in den einzelnen Ebenen eine Trennfläche gebildet. In benachbarten Trennflächen sind an jeweils gegenüberliegenden Seiten Überströmöffnungen in den Querwänden vorhanden, so dass zwischen zwei Trennflächen oder einer Trennfläche und der oberen oder unteren Abdeckung ein Strömungskanal bzw. in dem Gehäuse ein zwischen den Trennflächen bzw. Rohrleitungsebenen mäanderförmig verlaufender Strömungskanal gebildet wird.

In weiterer Ausbildung der Erfindung stehen sich die Überströmöffnungen von benachbarten Trennflächen jeweils in Bezug auf die Längsrichtung oder die Querrichtung der Rohrleitung gegenüber, so dass das im Gehäuse zwischen den Trennflächen zwangsgeführte Medium entweder im Gleichstrom oder im Gegenstrom oder im Kreuzstrom zu dem in der Rohrleitung strömenden Medium fließt.

In Ausgestaltung der Erfindung weist die in die Querwände (Trennfläche) eingebundene Rohrleitung zur Erzielung einer verlustarmen, strömungsgünstigen Bewegung des Mediums in dem Strömungskanal zwischen den Trennflächen eine im Querschnitt abgeflachte, im Wesentlichen ovale Form auf.

In vorteilhafter Weiterbildung der Erfindung ist an der Außenseite des Gehäuses des Rohrwärmetauschermoduls eine bei dessen Herstellung einstückig angeformte Isolier- oder Vakuumkammer ausgebildet, um dadurch die Wärmeabstrahlung nach außen zu verringern oder zu verhindern. Bei einem aus zwei oder mehreren Rohrwärmetauschermodulen zusammengesetzten Rohrwärmetauscher kann die Isolier- bzw. Vakuumkammer auch nur an den die Außenflächen des Rohrwärmetauschers bildenden Seiten der Rohrwärmetauschermodule vorgesehen sein.

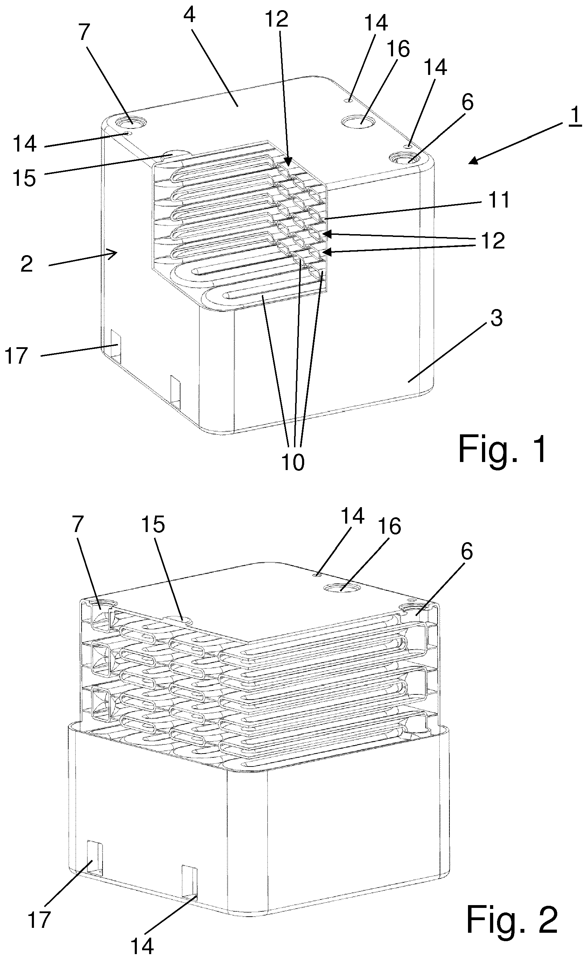

Ein Ausführungsbeispiel der Erfindung wird anhand der Zeichnung, in der
- Fig. 1: eine perspektivische Ansicht eines in einem Eckbereich aufgeschnittenen Rohrwärmetauschermoduls;
- Fig. 2: eine Ansicht des im oberen Bereich an zwei Seiten aufgeschnittenen Rohrwärmetauschermoduls nach Fig. 1:
- Fig. 3: eine Ansicht des Rohrwärmetauschermoduls mit weggeschnittener oberer Gehäuseabdeckung;
- Fig. 4: eine Vertikalschnittansicht des Rohrwärmetauschermoduls senkrecht zu den Innenrohren;
- Fig. 5: eine Vertikalschnittansicht des Rohrwärmetauschermoduls in Längsrichtung der Innenrohre; und
- Fig. 6: eine perspektivische Ansicht eines aus zwei miteinander verbundenen Modulen bestehenden Rohrwärmetauschers
zeigt, näher erläutert.

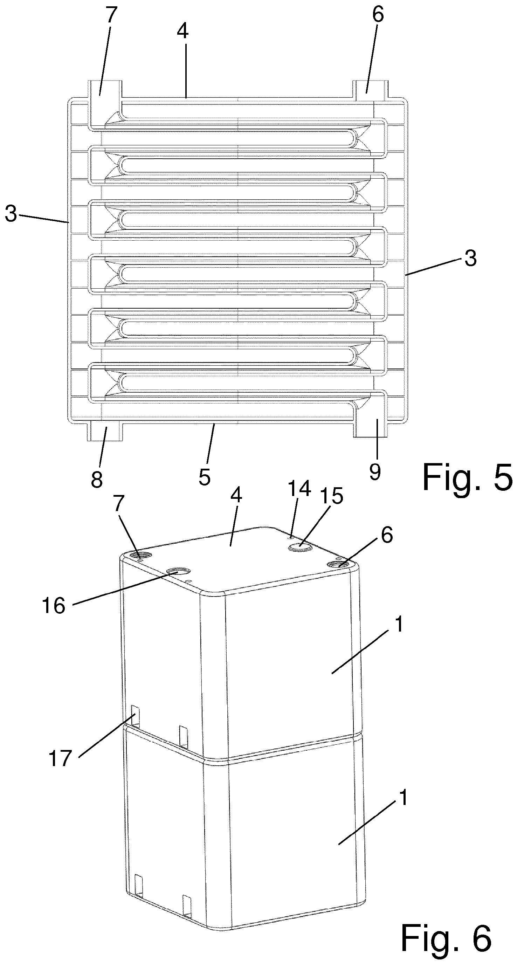

Der Rohrwärmetauscher kann aus nur einem Rohrwärmetauschermodul 1 bestehen oder aus zwei (Fig. 6) oder mehreren - miteinander verschraubten und an den Medienanschlüssen für die Zu- und Abführung des jeweiligen Mediums abdichtend miteinander verbundenen - Rohrwärmetauschermodulen 1 zusammengesetzt sein. Jedes Rohrwärmetauschermodul 1 ist durch Lasersintern oder Laserschmelzen (Lasercusing) aus einem - beispielsweise aus Kupfer, Aluminium oder Edelstahl bestehenden - pulverförmigen Ausgangsmaterial gefertigt und einstückig ausgebildet. Aufgrund des Fertigungsverfahrens können die Rohrwärmetauschermodule klein und kompakt gestaltet und bei hoher Wärmeübertragungseffizienz in einem begrenzten Bauraum untergebracht werden. Wegen der Möglichkeit einer modulartigen Zusammensetzung des Rohrwärmetauschers kann die Wärmeaustauschkapazität entsprechend den jeweiligen Anforderungen und dem für die Anordnung der Module zur Verfügung stehenden Platz beliebig eingestellt werden.

Ein Rohrwärmetauschermodul 1 umfasst einen Mantelraum in Form eines als Quader, insbesondere eines Würfels, ausgebildeten Gehäuses 2 mit einem Gehäusemantel aus vier Seitenwänden 3 sowie einer oberen und einer unteren Abdeckung 4, 5. In der oberen Abdeckung 4 ist in zwei diagonal gegenüberliegenden Ecken eine erste Zuführungsöffnung 6 für ein erstes Medium und eine zweite Zuführungsöffnung 7 für ein zweites Medium ausgebildet. In der unteren Abdeckung 5 (Fig. 5) sind in den beiden anderen diagonal gegenüberliegenden Ecken eine erste Auslassöffnung 8 für das erste Medium und eine zweite Auslassöffnung 9 für das zweite Medium vorgesehen. Während die erste Zuführungsöffnung 6 und die erste Auslassöffnung 8 unmittelbar mit dem Innenraum des Gehäuses 2 verbunden sind, schließen die zweite Zuführungsöffnung 7 und die zweite Auslassöffnung 9 direkt an eine im Innern des Gehäuses 2 in mehreren waagerechten Ebenen mäanderförmig oder schlangenlinienförmig verlaufende Rohrleitung 10 an. Die Rohrleitung 10 hat einen annähernd ovalen oder aus der Kreisform abgeflachten Querschnitt. Die in den einzelnen waagerechten Ebenen verlaufenden Rohrleitungsabschnitte sind durch Querwände 11 miteinander und mit der Innenfläche des Gehäuses 2 verbunden, so dass in jeder Ebene durch die Rohrleitung 10 und die Querwände 11 eine Trennfläche 12 ausgebildet ist, wobei jedoch an jeweils gegenüberliegenden Seiten von jeweils benachbarten Trennflächen Öffnungen 13 für den Durchgang des im Innenraum des Gehäuses 2 strömenden Mediums vorgesehenen sind.

Das erste Medium strömt somit im Gehäuse 2 über die Öffnungen 13 zwischen den Trennflächen 12 mäanderförmig und quer zur Längsrichtung der Rohrleitung 10 von der ersten Zuführungsöffnung 6 zur ersten Auslassöffnung 8, während das zweite Medium in der Rohrleitung 10 im Kreuzstrom zum ersten Medium von der zweiten Zuführungsöffnung 7 zur zweiten Auslassöffnung 9 fließt. Bei einer zu der zuvor beschriebenen Anordnung der Öffnungen 13 jeweils um 90° versetzten Anordnung kann das erste Medium auch im Gleich- bzw. Gegenstrom zu dem in der mäanderförmig verlaufenden Rohrleitung 10 fließenden zweiten Medium geführt werden.

Aufgrund des zwischen den Trennflächen 12 mäanderförmig (in mehreren Ebenen) gestalteten ersten Strömungskanals und des in mehreren Ebenen aus einer schlangenlinienförmig verlaufenden Rohrleitung 10 gebildeten zweiten Strömungskanals wird ein durch selektives Laserschmelzen hergestellter, kompakter, einstückig ausgebildeter Rohrwärmetauscher mit minimalem Platzbedarf und hoher Wärmeübertragungseffizienz bereitgestellt.

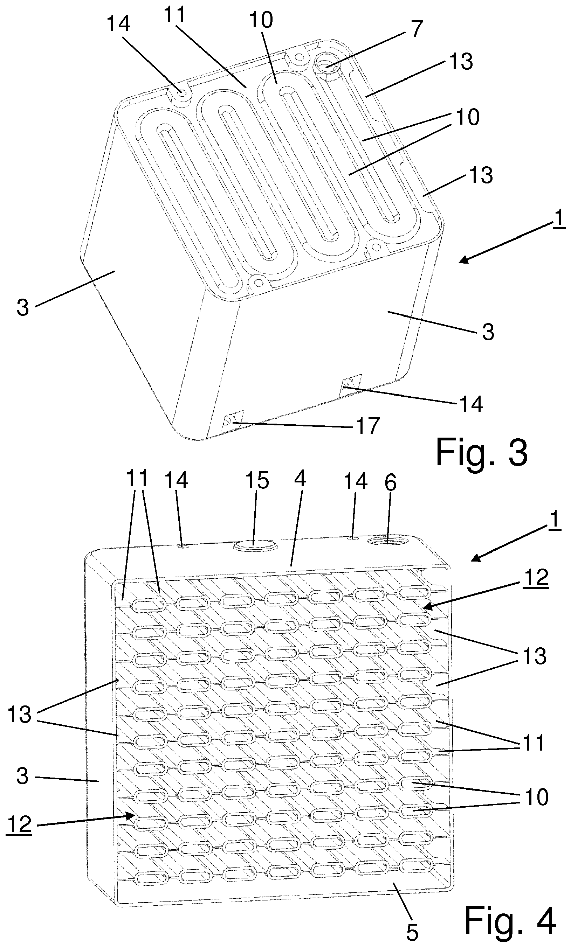

Zur Erzielung einer größeren, mit einem derart klein ausgebildeten Rohrwärmetauschermodul nicht erreichbaren Wärmeübertragungskapazität, können - wie Fig. 6 zeigt - zwei oder auch mehrere Module aneinandergefügt werden, indem im Bereich der oberen und unteren Abdeckung 4, 5 des Gehäuses 2 zueinander fluchtende Bohrungen 14 zur Herstellung einer Schraubverbindung vorgesehen sind. In der oberen Abdeckung 4 und der unteren Abdeckung 5 sind als Montagehilfe jeweils eine Erhöhung 15 und eine Vertiefung 16 ausgeformt, um zu gewährleisten, dass die Auslassöffnungen 8, 9 des einen Rohrwärmetauschermoduls jeweils lagerichtig sowie fluchtend und abdichtend an den zugehörigen Zuführungsöffnungen 6, 7 des angrenzenden Rohrwärmetauschermoduls liegen. Wie insbesondere Fig. 3 zeigt, sind die im Bereich der unteren Abdeckung 5 liegenden Bohrungen 14 jeweils in eine Ausnehmung 17 der Seitenwände 3 integriert.

### Bezugszeichenliste

- 1: Rohrwärmetauschermodul
- 2: Gehäuse (Mantelraum)
- 3: Seitenwand von 2
- 4: obere Abdeckung von 2
- 5: untere Abdeckung von 2
- 6: erster Zuführungsanschluss für 1. Medium
- 7: zweiter Zuführungsanschluss für 2. Medium
- 8: erster Auslassanschluss für 1. Medium
- 9: zweiter Auslassanschluss für 2. Medium
- 10: Rohrleitung
- 11: Querwände
- 12: Trennfläche aus 10 und 11
- 13: Überströmöffnungen in 11 (12)
- 14: Bohrungen für Schraubverbindung
- 15: Erhöhung in 4, 5
- 16: Vertiefung in 4, 5
- 17: Ausnehmung in 3

## Patentansprüche

1. Rohrwärmetauscher zur indirekten Wärmeübertragung zwischen einer in einem Mantelraum angeordneten Rohrleitung (10) strömenden ersten Medium und einem durch den Mantelraum strömenden zweiten Medium, wobei der Rohrwärmetauscher mindestens ein durch Laserschmelzen in einem Stück ausgebildetes, quader- oder würfelförmiges Rohrwärmetauschermodul (1) umfasst, dessen Rohrleitung (10) in einem den Mantelraum bildenden geschlossenen Gehäuse (2) mit ersten und zweiten Zuführungsanschlüssen (6, 7) und Auslassanschlüssen (8, 9) für das erste und zweite Medium in zwei oder mehreren Ebenen und jeweils mäanderförmig verläuft, wobei zwei oder mehrere Rohrwärmetauschermodule (1) über oder nebeneinander montierbar und fest sowie an den jeweiligen, in einer Abdeckung (4, 5) oder Seitenwand (3) ausgebildeten Zuführungs- und Auslassanschlüssen (6 bis 9) abdichtend miteinander verbindbar sind, wobei die in derselben Ebene verlaufenden Abschnitte der Rohrleitung (10) untereinander und mit der Innenfläche der Seitenwände (3) durch Querwände (11) verbunden sind und mit diesen eine in dieser Ebene gebildete Trennfläche (12) bilden, wobei der zwischen zwei Trennflächen oder einer Trennfläche und der oberen oder unteren Abdeckung (4, 5) vorhandene Strömungsraum durch in benachbarten Trennflächen (12) an jeweils gegenüberliegenden Seiten vorhandene Überströmöffnungen (13) in den Querwänden (11) mit dem jeweils angrenzenden Strömungsraum verbunden ist und somit in dem Gehäuse (2) ein mäanderförmig verlaufender Strömungskanal für das zweite Medium gebildet ist.

2. Rohrwärmetauscher nach Anspruch 1, **dadurch gekennzeichnet, dass** die Rohrwärmetauschermodule (1) an den mit den Zuführungs- und Auslassanschlüssen (6 bis 9) versehenen Bereichen des Gehäuses (2) miteinander verschraubt sind.

3. Rohrwärmetauscher nach Anspruch 1 oder 2, **dadurch gekennzeichnet, dass** zur lagerichtigen und einfachen Montage der Rohrwärmetauschermodule (1) an deren mit den Zuführungs- und Auslassanschlüssen (6 bis 9) versehenen Flächen ineinandergreifende Erhöhungen und Vertiefungen (15, 16) ausgebildet sind.

4. Rohrwärmetauscher nach einem der vorangehenden Ansprüche, **dadurch gekennzeichnet, dass** sich die Überströmöffnungen (13) von benachbarten Trennflächen (12) jeweils in Bezug auf die Längsrichtung oder die Querrichtung der Rohrleitung gegenüberstehen, wobei das im Gehäuse zwischen den Trennflächen zwangsgeführte Medium im Gleich- oder Gegenstrom oder im Kreuzstrom zu dem in der Rohrleitung (10) strömenden Medium fließt.

5. Rohrwärmetauscher nach einem der vorhergehenden Ansprüche, **dadurch gekennzeichnet, dass** die Rohrleitung (10) zur Erzielung einer verlustarmen, strömungsgünstigen Bewegung des Mediums zwischen den Trennflächen (12) eine im Querschnitt abgeflachte, im Wesentlichen ovale Form aufweist.

6. Rohrwärmetauscher nach einem der vorhergehenden Ansprüche, **dadurch gekennzeichnet, dass** das Gehäuse (2) des Rohrwärmetauschermoduls (1) zur Minimierung der Wärmeabstrahlung nach außen ganz oder teilweise von einer im Herstellungsprozess einstückig angeformten Isolier- oder Vakuumkammer umgeben ist.

## Claims

1. A tube heat exchanger for indirect heat transfer between a first medium flowing in a tubing (10) arranged in a jacket space and a second medium flowing through the jacket space, wherein the tube heat exchanger comprises at least one cuboid or cubic tube heat exchanger module (1) formed by laser melting in one piece, of which the tubing (10) runs in a closed housing (2) forming the jacket space and having first and second supply connections (6, 7) and outlet connections (8, 9) for the first and second medium in two or more planes and respectively meandering, wherein two or more tube heat exchanger modules (1) can be arranged one above the other or side by side and can be connected together fixedly and sealingly at the respective supply and outlet connections (6 to 9) formed in a cover (4, 5) or side wall (3), wherein the sections of the tubing (10) running in the same plane are connected to one another and to the inner surface of the side walls (3) by transverse walls (11) and form with them a separation area (12) formed in this plane, wherein the flow space present between two separation areas or a separation area and the upper or lower cover (4, 5) is connected by overflow openings (13) present in adjacent separation areas (12) at opposite sides respectively in the transverse walls (11) to the respective adjacent flow space and thus in the housing (2) a meandering flow channel for the second medium is formed.

2. The tube heat exchanger according to claim 1, **characterized in that** the tube heat exchanger modules (1) are screwed together at the areas of the housing (2) provided with the supply and outlet connections (6 to 9).

3. The tube heat exchanger according to claim 1 or 2, **characterized in that** for correct position and ease of installation of the tube heat exchanger modules (1) interlocking elevations and depressions (15, 16) are formed at their surfaces provided with the supply and outlet connections (6 to 9).

4. The tube heat exchanger according to one of the preceding claims, **characterized in that** the overflow openings (13) of adjacent separation areas (12) face each other respectively with respect to the longitudinal direction or the transverse direction of the tubing, wherein the medium forcibly guided in the housing between the separation areas flows in concurrent- or countercurrent- or in cross-current-flow to the medium flowing in the tubing (10).

5. The tube heat exchanger according to one of the preceding claims, **characterized in that** the tubing (10) has a cross-sectionally flattened, substantially oval shape for achieving a low-loss, flow-favorable movement of the medium between the separation areas (12).

6. The tube heat exchanger according to one of the preceding claims, **characterized in that** the housing (2) of the tube heat exchanger module (1) is completely or partially surrounded by an insulating or vacuum chamber integrally formed with it in the manufacturing process for minimizing the heat radiation to the outside.

## Revendications

1. Un échangeur de chaleur tubulaire pour transfert de chaleur indirect entre un premier fluide s'écoulant dans une tuyauterie (10) disposée dans une espace d'enveloppe et un second fluide s'écoulant à travers l'espace d'enveloppe, dans lequel l'échangeur de chaleur tubulaire comprend au moins un module (1) d'échangeur de chaleur tubulaire parallélépipédique ou cubique qui est formé par fusion au laser dans une pièce, dont la tuyauterie (10) s'étend dans un logement (2) fermé formant l'espace d'enveloppe et ayant des premier et second raccords d'alimentation (6, 7) et raccords de sortie (8, 9) pour le premier et le second fluide dans deux ou plusieurs plans et respectivement en forme de méandres, dans lequel deux ou plusieurs modules (1) d'échangeur de chaleur tubulaires (1) peuvent être disposés l'un au-dessus de l'autre ou côte à côte et peuvent être connectés l'un à l'autre de manière fixe et de manière étanche aux raccords d'alimentation et de sortie (6 à 9) respectifs formés dans un couvercle (4, 5) ou une paroi latérale (3), dans lequel les sections de la tuyauterie (10) s'étendant dans le même plan sont connectées les unes aux autres et à la surface intérieure des parois latérales (3) par des parois transversales (11) et forment avec celles-ci une surface (12) de séparation formée dans ce plan, dans lequel l'espace d'écoulement existante entre deux surfaces de séparation ou une surface de séparation et le couvercle (4, 5) supérieur ou inférieur est connectée à l'espace d'écoulement adjacente respective par des ouvertures (13) de débordement existantes dans des surfaces (12) de séparation adjacentes à des côtés opposés respectifs dans les parois transversales (11) et ainsi, dans le logement (2) un passage d'écoulement en forme de méandres pour le second fluide est formé.

2. L'échangeur de chaleur tubulaire selon la revendication 1, **caractérisé en ce que** les modules (1) d'échangeur de chaleur tubulaires sont vissées à des parties du logement (2) qui sont pourvues des raccords d'alimentation et de sortie (6 à 9).

3. L'échangeur de chaleur tubulaire selon la revendication 1 ou 2, **caractérisé en ce que** pour le montage correct et facile des modules (1) d'échangeur de chaleur tubulaires des saillies et des cavités (15, 16) en engagement mutuelles sont formées à leurs surfaces pourvues des raccords d'alimentation et de sortie (6 à 9).

4. L'échangeur de chaleur tubulaire selon l'une quelconque des revendications précédentes, **caractérisé en ce que** les ouvertures (13) de débordement des surfaces (12) de séparation adjacentes se font face respectivement par rapport à la direction longitudinale ou la direction transversale de la tuyauterie, dans lequel le fluide à guidage forcé dans le logement entre les surfaces de séparation s'écoule à co-courant ou à contre-courant ou à courant croisé au fluide s'écoulant dans la tuyauterie (10).

5. L'échangeur de chaleur tubulaire selon l'une quelconque des revendications précédentes, **caractérisé en ce que** la tuyauterie (10) a une forme à section transversale aplatie et de forme essentiellement ovale pour obtenir un mouvement du fluide à faible perte et conditions d'écoulement avantageuses entre les surfaces (12) de séparation.

6. L'échangeur de chaleur tubulaire selon l'une quelconque des revendications précédentes, **caractérisé en ce que** le logement (2) du module (1) d'échangeur de chaleur tubulaire est totalement ou partiellement entouré d'une chambre d'isolation ou d'une chambre à vide formée solidairement avec celui-ci dans le procédé de fabrication pour minimiser le rayonnement de chaleur vers l'extérieur.
